# EUROPÄISCHE PATENTSCHRIFT

(11) **EP 1 446 276 B1**
(45) Veröffentlichungstag und Bekanntmachung des Hinweises auf die Patenterteilung: **20.04.2005**
(21) Anmeldenummer: 02787682.0
(22) Anmeldetag: 14.11.2002
(51) Int. Cl.: B29C 45/50, B29C 45/68, B29C 45/82

(54) **ANTRIEBSVORRICHTUNG, INSBESONDERE FÜR DIE SCHLIESSEINHEIT, DIE EINSPRITZEINHEIT ODER DIE AUSWERFER EINER KUNSTSTOFFSPRITZGIESSMASCHINE**
DRIVE DEVICE, PARTICULARLY FOR THE CLOSING UNIT, THE INJECTION UNIT OR THE EJECTORS OF A PLASTIC INJECTION MOLDING MACHINE
DISPOSITIF D'ENTRAINEMENT, UTILISE EN PARTICULIER POUR L'UNITE DE FERMETURE, L'UNITE D'INJECTION OU LES EJECTEURS D'UNE MACHINE DE MOULAGE DE PLASTIQUE PAR INJECTION

(30) Priorität: 22.11.2001 DE 10157373
(43) Veröffentlichungstag der Anmeldung: 18.08.2004
(73) Patentinhaber: Bosch Rexroth AG, 97816 Lohr am Main (DE)
(72) Erfinder: DANTLGRABER, Jörg, 97816 Lohr (DE)
(86) Internationale Anmeldenummer: PCT/EP2002/012752
(87) Internationale Veröffentlichungsnummer: WO 2003/043797

(56) Entgegenhaltungen:
- WO-A-01/89801
- WO-A-92/11993
- WO-A-02/096617
- PATENT ABSTRACTS OF JAPAN vol. 018, no. 636 (M-1715), 5. Dezember 1994 (1994-12-05) -& JP 06 246806 A (MEIKI CO LTD), 6. September 1994 (1994-09-06)
- PATENT ABSTRACTS OF JAPAN vol. 2000, no. 15, 6. April 2001 (2001-04-06) -& JP 2000 334799 A (MITSUBISHI HEAVY IND LTD), 5. Dezember 2000 (2000-12-05)

## Beschreibung

Die Erfindung betrifft eine Antriebsvorrichtung, die insbesondere für die Schließeinheit oder die Einspritzeinheit oder die Auswerfer einer Kunststoffspritzgießmaschine verwendet werden soll und die die Merkmale aus dem Oberbegriff des Patentanspruchs 1 aufweist.

Eine solche Antriebsvorrichtung ist aus der JP06 246 806 bekannt.

Innerhalb der Schließeinheit einer Kunststoffspritzgießmaschine bewegt die Antriebsvorrichtung die bewegliche Formaufspannplatte der Maschine. Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum ändern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum ändern sind ohne wesentliche Bewegung hohe Kräfte auszuüben. Derartige Anforderungen können sich außer bei der Schließeinheit auch bei den Auswerfern oder der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluß daran die sich in der Form befindliche Kunststoffschmelze einem sogenannten Nachdruck ausgesetzt, so muß der Antrieb eine hohe Kraft ohne wesentliche Bewegung der Plastifizierschnecke aufbringen.

Aus der US-A 4,030,299 ist ein rein hydraulischer Antrieb für die bewegbare Formaufspannplatte einer Kunststoffspritzgießmaschine bekannt, der auch einen hydraulischen Kraftübersetzer enthält. Dieser weist einen bewegbaren Kolben kleiner Wirkfläche, einen weiteren bewegbaren Kolben großer Wirkfläche und einen Zylinder auf, der zusammen mit den Kolben einen mit einer Druckflüssigkeit gefüllten Druckraum einschließt. Der Zylinder ist ortsfest am Gestell der Spritzgießmaschine angeordnet. Zu dem Antrieb gehören außerdem Hydrozylinder, die zum Schließen und Öffnen der Form die bewegbare Formaufspannplatte verfahren. Im geöffneten Zustand der Form ist das Volumen des Druckraums des hydraulischen Kraftübersetzers minimal. Wird nun die bewegbare Formaufspannplatte von den Hydrozylindern im Sinne eines Schließens der Form verfahren, so wird der große Kolben des hydraulischen Kraftübersetzers mitgenommen, wobei sich das Volumen des Druckraums des hydraulischen Kraftübersetzers vergrößert und Druckmittel aus einem Behälter über ein Nachsaugventil in den Druckraum einströmt. Im Anschluß daran wird der kleine Kolben des hydraulischen Kraftübersetzers in den Druckraum hineingefahren und dadurch ein hoher Druck erzeugt, der über die große Wirkfläche des großen Kolbens eine hohe Schließkraft bewirkt. Der kleine Kolben wird durch Zufuhr von Druckflüssigkeit hydraulisch bewegt. Somit sind bei der Antriebsvorrichtung nach der US-A 4,030,299 für die Stellbewegung der bewegbaren Formaufspannplatte und für die Ausübung einer hohen Kraft verschiedene hydraulische Antriebskomponenten vorhanden. Zwischen dem Druckraum und dem Behälter fließt während der Stellbewegungen der Formaufspannplatte viel Druckflüssigkeit hin und her, was entsprechend große Ventile und Flüssigkeitskanäle bedingt.

Eine weitere Antriebsvorrichtung ist aus der DE 41 11 594 A1 bekannt. Bei dieser Antriebsvorrichtung ist mit der beweglichen Formaufspannplatte ein Hydrozylinder mit einer großen Wirkfläche fest verbunden. Die Einheit aus beweglicher Formaufspannplatte und Hydrozylinder kann von einem Elektromotor über ein Getriebe, das eine Hubspindel und eine Spindelmutter umfaßt, verfahren werden, um die Form schnell zu schließen und schnell zu öffnen. Die hohe Schließkraft wird durch Druckbeaufschlagung des mit der Formaufspannplatte verfahrbaren Hydrozylinders aufgebracht. Dabei wird die gesamte Reaktionskraft über die Spindel und die Spindelmutter auf das Maschinengestell abgeleitet. Die Kunststoffspritzgießmaschine nach der DE 41 11 594 A1 ist außer mit den Komponenten des elektrischen Antriebs auch mit einem vollständigen hydraulischen System einschließlich Ölbehälter, Pumpe, Ventilen und Hydrozylinder ausgestattet.

Der Erfindung liegt die Aufgabe zugrunde, eine Antriebsvorrichtung, die die Merkmale aus dem Oberbegriff des Patentanspruchs 1 aufweist, so weiterzuentwickeln, daß mit geringem Aufwand einerseits eine schnelle Stellbewegung möglich ist und andererseits auch eine große Kraftwirkung erzielt werden kann.

Das gesetzte Ziel wird dadurch erreicht, daß die Antriebsvorrichtung mit den Merkmalen aus dem Oberbegriff erfindungsgemäß auch die Merkmale aus dem kennzeichnenden Teil des Patentanspruchs 1 aufweist. Bei einer solchen Antriebsvorrichtung wird somit ein hydraulischer Kraftübersetzer verwendet, in dessen Druckraum zumindest während der Stellbewegung und der anschließenden Ausübung einer hohen Kraft ein bestimmtes Volumen einer Druckflüssigkeit eingeschlossen ist, sieht man einmal von Volumenänderungen aufgrund einer Druckänderung ab. Sonstige hydraulische Komponenten sind vom Prinzip her für eine erfindungsgemäße Antriebsvorrichtung nicht notwendig. Der kleine Kolben des hydraulischen Kraftübersetzers ist erfindungsgemäß mechanisch mit dem durch den Elektromotor axial verfahrenbaren Antriebselement verbunden. Weiterhin ist gemäß der Erfindung für die Stellbewegung eines anzutreibenden Elements die Hydroeinheit als Ganzes verfahrbar, wodurch die Geschwindigkeit des mit dem anzutreibenden Element mechanisch gekoppelten großen Kolbens gleich der hohen Geschwindigkeit des vom Elektromotor axial verfahrenen Antriebselements ist. Um eine hohe Kraft ausüben zu können, wird das Zwischenteil des hydraulischen Kraftübersetzers gegen eine Verschiebung relativ zu einem ortsfesten Gestell durch eine Blockiereinrichtung blockiert, so daß durch ein weiteres Verfahren des kleinen Kolbens um einen relativ kleinen Weg im Druckraum des Kraftübersetzers ein hoher Druck aufgebaut werden kann, der an der großen Wirkfläche des großen Kolbens eine hohe Kraft erzeugt. Dabei ist über das Antriebselement nur ein der Wirkfläche des kleinen Kolbens entsprechender Anteil der Kraft abzustützen.

Außerdem weist die Hydroeinheit einen zweiten kleinen Kolben auf und es ist zwischen einem Fluidraum, an den der zweite kleine Kolben angrenzt und dem Druckraum ein Ventil angeordnet, über das Druckflüssigkeit in den Druckraum verdrängbar ist und durch das der Fluidraum gegenüber dem Druckraum absperrbar ist. Zum Aufbau des Druckes im Druckraum wird vom ersten kleinen Kolben der Druckraum verkleinert und zusätzlich in einer ersten Phase vom zweiten kleinen Kolben Druckflüssigkeit aus dem Fluidraum in den Druckraum verdrängt. In diesem steigt der Druck mit dem Weg des Antriebselements schnell an. In Abhängigkeit vom Weg der kleinen Kolben, vorzugsweise jedoch in Abhängigkeit von dem im Druckraum erreichten Druck, wird für die zweite Phase des Druckaufbaus die Verdrängung von Druckflüssigkeit aus dem Fluidraum in den Druckraum beendet und das Ventil schließt. Der weitere Druckaufbau wird allein durch die Verschiebung des ersten kleinen Kolbens bewirkt. Dadurch bleibt die über das Antriebselement auszuübende Kraft begrenzt. Das Ventil ist gemäß Patentanspruch 2 bevorzugt ein Rückschlagventil, das sich zum Druckraum hin öffnet. Der zweite kleine Kolben kann größer als der erste kleine Kolben sein.

Weitere vorteilhafte Ausgestaltungen einer erfindungsgemäßen Antriebsvorrichtung finden sich in den Unteransprüchen.

Der zweite kleine Kolben ist von dem Antriebselement während der Stellbewegung und während der ersten Phase des Druckaufbaus genauso wie der erste kleine Kolben mitnehmbar. Gemäß Patentanspruch 3 ist der zweite kleine Kolben von dem Antriebselement über eine lösbare Kupplungseinrichtung mitnehmbar. Für die zweite Phase des Druckaufbaus kann diese Kupplung gelöst werden, so daß der zweite kleine Kolben in dieser Phase im wesentlichen in Ruhe bleibt. Insbesondere kann vorgesehen sein, daß das Antriebselement den zweiten kleinen Kolben über eine vorgespannte Federanordnung mitnimmt, deren Vorspannung bei einem bestimmten Druck im Fluidraum nicht mehr zur Übertragung einer Bewegung vom Antriebselement auf den zweiten kleinen Kolben ausreicht. Der Druck im Fluidraum steigt dann in der zweiten Phase nur entsprechend der Federkennlinie an.

Gemäß Patentanspruch 5 ist der Fluidraum am zweiten kleinen Kolben über ein zweites Ventil mit einem Vorratsraum für Druckflüssigkeit verbindbar, wobei nach dem Öffnen des zweiten Ventils durch den weiter vom sich in der Kraftaufbaubewegung befindliche Antriebselement mitgenommenen zweiten kleinen Kolben Druckflüssigkeit aus dem Teildruckraum in den Vorratsraum verdrängbar ist. Der zweite kleine Kolben kann dabei fest oder über eine vorgespannte Federanordnung mit dem Antriebselement gekoppelt sein, wobei letzteres auf einfache Weise ein Ausgleich von Ausrichtungsfehlem zwischen Antriebselement und Kolben ermöglicht. Das zweite Ventil wird gemäß Patentanspruch 6 bevorzugt von dem Druck im Fluidraum gesteuert, der das Steuerteil des Ventils gegen die Kraft eines Kraftspeichers, der insbesondere durch eine Feder realisiert ist, in Öffnungsrichtung beaufschlagt. Parallel zu dem zweiten Ventil ist zwischen dem Fluidraum und dem Vorratsraum ein zum Fluidraum hin öffnendes Rückschlagventil angeordnet, über das während der den Druckabbau herbeiführenden Bewegung des Antriebselements und der damit verbundenen Vergrößerung des Fluidraums Druckflüssigkeit aus dem Vorratsraum in den Fluidraum strömen kann. Gemäß Patentanspruch 8 ist gegen Ende der Druckabbaubewegung der Druckraum mit dem Vorratsraum verbindbar, wobei die während der ersten Phase des Druckaufbaus aus dem Fluidraum in den Druckraum verdrängte Druckflüssigkeitsmenge in den Vorratsraum gelangt. Die Verbindung wird gemäß Patentanspruch 9 bevorzugt über eine Steuerkante am ersten kleinen Kolben hergestellt.

Gemäß Patentanspruch 10 befindet sich auf der dem Fluidraum gegenüberliegenden Seite des zweiten kleinen Kolbens ein zweiter Fluidraum, in den, Druckflüssigkeit einsperrbar ist, so daß über die eingesperrte Druckflüssigkeit die Hydroeinheit vom Antriebselement im Rückzug mitnehmbar ist.

Der zweite Fluidraum wird außerdem in der als besonders vorteilhaft angesehenen Ausgestaltung gemäß Patentanspruch 11 auch als Pumpenarbeitsraum genutzt, der über ein Einlaßventil mit dem Vorratsraum und über ein Auslaßventil mit einem Hochdruckspeicher verbindbar ist. Aus dem Hochdruckspeicher kann insbesondere eine hydraulisch betätigbare Blockiereinrichtung für das Zwischenteil der Hydroeinheit mit Druckflüssigkeit versorgt werden. Dazu ist gemäß Patentanspruch 12 ein Arbeitsraum der Blockiereinrichtung in einer Stellung eines Ventils mit dem Hochdruckspeicher und in einer anderen Stellung dieses Ventils mit dem Vorratsraum verbunden.

Mehrere Ausführungsbeispiele einer erfindungsgemäßen Antriebsvorrichtung für die Schließeinheit einer Kunststoffspritzgießmaschine sind in den Zeichnungen dargestellt. An Hand dieser Zeichnungen wird die Erfindung nun näher erläutert.

Es zeigen
- Figur 1: ein erstes Ausführungsbeispiel, bei dem der zweite kleine Kolben bis zum Erreichen eines bestimmten Druckes zum Druckaufbau im Druckraum bei trägt und nur bis dahin vom Antriebselement mitgenommen wird,
- Figur 2: ein zweites Ausführungsbeispiel ähnlich demjenigen nach Figur 1. wobei der Beitrag des zweiten kleinen Kolbens zum Druckaufbau im Druckraum vom Weg des ersten kleinen Kolbens abhängt, und
- Figur 3: ein drittes Ausführungsbeispiel, bei dem der zweite kleine Kolben die ganze Bewegung des Antriebselements mitmacht und nach dem Erreichen eines bestimmten Druckes im Druckraum die Druckflüssigkeit in einen Vorratsraum verdrängt.

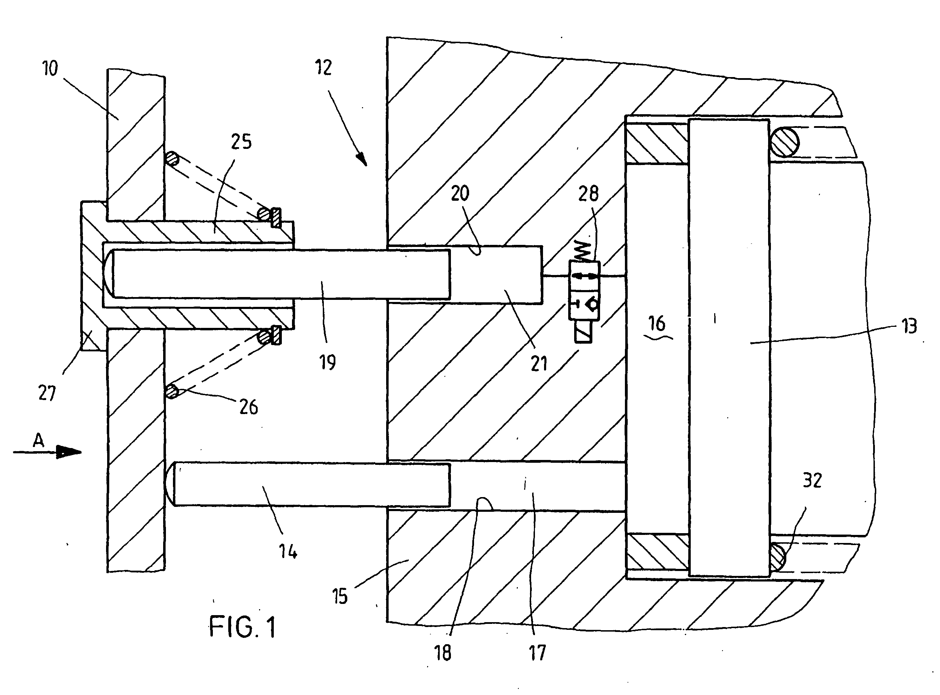

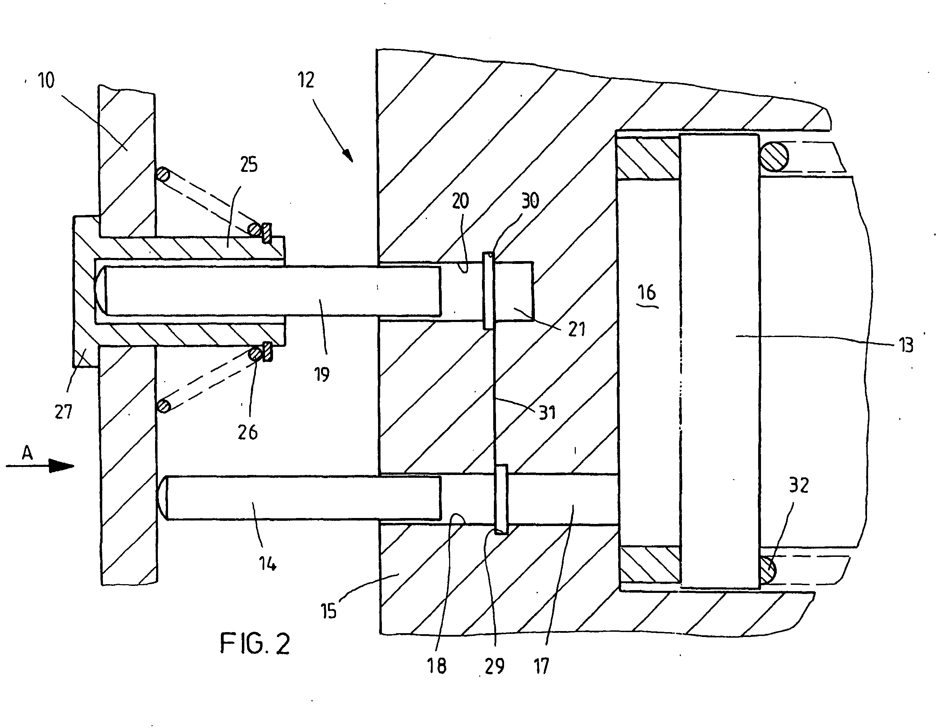

Gemäß Figuren 1 und 2 ist eine Antriebsplatte 10 als Antriebselement in nicht näher dargestellter Weise von einem Elektromotor über einen Spindeltrieb nach entgegengesetzten Richtungen verfahrbar. Ein hydraulischer Kraftübersetzer 12 weist als Hauptteile einen großen Kolben 13, und einen oder mehrere erste kleine Kolben 14 sowie ein Zwischenteil 15 auf, das zusammen mit den Kolben einen Druckraum 16 einschließt. Dieser Druckraum umfaßt einerseits den Teilraum, der sich zwischen dem großen Kolben 13 und dem Boden des den großen Kolben aufnehmenden Hohlraums befindet, und andererseits einen Teilraum 17 in einer durchgehenden Bohrung 18 des Zwischenteils, in die der kleine Kolben 14 als Plungerkolben abgedichtet eintaucht und die in den Hohlraum für den großen Kolben 13 mündet. Mit einer konvex gewölbten Stirnfläche liegt der kleine Kolben 14 an dem Antriebselement 10 an.

Der Kraftübersetzer 12 umfaßt außerdem einen oder mehrere zweite kleine Kolben 19. Der Durchmesser des zweiten kleinen Kolbens ist größer als der Durchmesser des ersten zweiten Kolbens. Auch der zweite kleine Kolben ist ein Plungerkolben, der jedoch mit seinem einen Ende anders als der erste kleine Kolben nicht in eine Durchgangs-, sondern in eine Sackbohrung 20 des Zwischenteils abgedichtet eintaucht und in dieser einen Fluidraum 21 begrenzt. Mit seinem anderen Ende taucht der zweite kleine Kolben mit seitlichem Spiel in eine Büchse 25 ein, an deren Boden er mit einer konvex gewölbten Stirnfläche anliegt. Aufgrund der gewölbten Stirnfläche an den kleinen Kolben ist ein Ausgleich von Fluchtungsfehlern zwischen den kleinen Kolben und der Antriebsplatte 10 möglich.

Die Büchse 25 ist längsbeweglich in eine Bohrung der Antriebsplatte 10 eingesetzt. Eine Druckfeder 26, die mit einer gewissen Vorspannung zwischen der Antriebsplatte und der Büchse angeordnet ist, sucht einen Flansch 27 der Büchse an der Antriebsplatte zu halten.

Bei dem Ausführungsbeispiel nach Figur 1 sind der Druckraum 16 und der Fluidraum 21 unter Verwendung eines elektromagnetisch betätigbaren 2/2 Wege Sitzventils 28, das unmittelbar zwischen den Fluidraum 21 und den den großen Kolben 13 aufnehmenden Hohlraum eingefügt ist, miteinander verbindbar und ge-geneinander absperrbar.

Bei dem Ausführungsbeispiel nach Figur 2 ist das 2/2 Wege Sitzventil durch eine Steuerung mit dem ersten kleinen Kolben 14 ersetzt. Um die Bohrung 18 führt eine Ringnut 29 und um die Bohrung 20 eine Ringnut 30 herum, die über einen Kanal 31 mit der Ringnut 29 verbunden ist. Der Kolben 14 überdeckt die Ringnut 29, wenn er weit genug in die Bohrung 18 eingetaucht ist. Ebenso überdeckt der Kolben 19 die Ringnut 30, wenn er weit genug in die Bohrung 20 eingetaucht ist. Mit der Überdeckung der Ringnut 30 durch den Kolben 19 endet die erste Phase und beginnt die zweite Phase des Druckaufbaus in dem Druckraum 16. Diese Überdeckung geschieht etwas eher als die Überdeckung der Ringnut 29 durch den Kolben 14, so daß während der Phase zwei des Druckaufbaus in dem Druckraum 16 dieser Druckraum sowohl durch den Kolben 14 als auch durch den Kolben 19 gegen den Fluidraum 21 abgedichtet ist.

Zwischen dem großen Kolben 13 und dem Zwischenteil 15 ist eine Schraubendruckfeder 32 eingespannt, die beim Rückzug der Schließeinheit den großen Kolben mitsamt dem beweglichen Teil des Formwerkzeugs am Boden des Druckraums 16 und damit am Zwischenteil zu halten vermag.

Die Antriebsplatte 10 und das Zwischenteil 15 sind in nicht näher dargestellter Weise über eine zum Beispiel elektromagnetisch betätigbare Kupplung lösbar miteinander verbindbar. Außerdem ist, in den Figuren 1 und 2 ebenfalls nicht näher dargestellt eine Blockiereinrichtung vorhanden, mit deren Hilfe das Zwischenteil 15 am Ende der Stellbewegung bezüglich des Maschinengestells festgehalten werden kann, um die Kraftübersetzung wirksam werden zu lassen.

In den Figuren 1 und 2 möge die Antriebsvorrichtung in einem Zustand gezeigt sein, in dem die Form einer Kunststoffspritzgießmaschine ganz geöffnet ist. Der große Kolben 13 liegt unter der Wirkung der Schraubenfeder 32 am Zwischenteil 15 an. Die kleinen Kolben 14 und 19 sind am wenigsten weit in die Bohrungen 18 und 20 eingetaucht. Bei dem Ausführungsbeispiel nach Figur 1 ist das Ventil 28 offen, bei dem Ausführungsbeispiel nach Figur 2 sind die Ringnuten 29 und 30 nicht überdeckt, so daß der Fluidraum 21 zum Druckraum 16 hin offen ist.

Zum Schließen der Form ist die Kupplung zwischen der Antriebsplatte 10 und dem Zwischenteil 15 des Kraftübersetzers 12 geschlossen. Die Blockiereinrichtung zwischen dem Zwischenteil 15 und dem Maschinengestell ist gelöst. Der nicht näher dargestellte Elektromotor wird nun so angesteuert, daß sich sein Rotor in eine Richtung dreht, durch die über den Spindeltrieb die Antriebsplatte 10 in Richtung des Pfeiles A bewegt wird. Von der Antriebsplatte werden die kleinen Kolben 14 und 19 mitgenommen. Über die geschlossene Kupplung werden von der Antriebsplatte auch das Zwischenteil 15 und der große Kolben 13 mitgenommen, so daß die Teile des Kraftübersetzers 12 nicht gegeneinander bewegt werden. Als Alternative zu einer geschlossenen Kupplung kann die Antriebsplatte den großen Kolben 13 und das Zwischenteil auch über das Druckflüssigkeitspolster in den Räumen 16 und 21 mitnehmen. Ist in den Räumen ein genügend hoher Vorspanndruck vorhanden, folgt der große Kolben 13 unmittelbar der Bewegung der kleinen Kolben 14 und 19 und nimmt über die Schraubendruckfeder 32 auch das Zwischenteil 15 mit.

Schließlich ist die Form geschlossen, so daß der weiteren Bewegung des großen Kolbens 13 ein hoher Widerstand entgegensteht. Die eventuell geschlossene Kupplung zwischen der Antriebsplatte 10 und dem Zwischenteil 15 wird gelöst. Das Zwischenteil 15 wird in der erreichten Position blockiert. Die Antriebsplatte 10 wird weiter bewegt, so daß die kleinen Kolben 14 und 19 tiefer in die Bohrungen 18 und 20 eintauchen und den Teilraum 17 und den Fluidraum 21 verkleinern. Druckflüssigkeit aus dem Fluidraum 21 wird über den Kanal 31 in den Teilraum 17 und damit in den Druckraum 16 verdrängt. Das Gesamtvolumen des Druckraums 16 und des Fluidraums 21 verringert sich schnell, so daß der Druck im Druckraum 16 in einer ersten Phase des Druckaufbaus schnell ansteigt. Bei dem Ausführungsbeispiel nach Figur 1 wird das Ventil 28 in seine Schließstellung gebracht, wenn ein bestimmter Druck, zum Beispiel ein Druck von 50 bar im Druckraum 16 erreicht ist. Bei dem Ausführungsbeispiel nach Figur 2 überdeckt der zweite kleine Kolben 19 nach einem bestimmten Weg, nach dem zum Beispiel ein Druck von 50 bar in den Räumen 16 und 21 erreicht ist, die Ringnut 30 ab. Gegen den Druck von 50 bar vermag die Feder 26 die Büchse 25 noch in Anlage an der Antriebsplatte 10 zu halten. In der jetzt beginnenden zweiten Phase des Druckaufbaus wird keine Druckflüssigkeit mehr aus dem Fluidraum 21 in den Druckraum 16 verdrängt. Der weitere Druckanstieg wird allein durch den weiter mit der Antriebsplatte 10 bewegten ersten kleinen Kolben bewirkt. Der Druck in dem Fluidraum 21 steigt bis auf das leicht über dem bestimmten Druck von zum Beispiel 50 bar liegende Druckäquivalent zur Kraft der vorgespannten Druckfeder an. Danach hebt die Büchse 25 von der Antriebsplatte 10 ab, wobei sich die Spannung der Druckfeder 26 und der Druck im Fluidraum 21 entsprechend der Kennlinie der Druckfeder 26 erhöhen. Am Ende der zweiten Phase des Druckaufbaus im Druckraum 16 wird die Form mit einer hohen Schließkraft zugehalten, die sich aus dem Produkt des Drucks im Druckraum 16 und der Wirkfläche des großen Kolbens 13 abzüglich der Kraft der Schraubendruckfeder 32 ergibt. Die Reaktionskraft auf den Spindeltrieb dagegen ist durch das Produkt aus dem Druck im Druckraum 16 und der wesentlich kleineren Wirkfläche des ersten kleinen Kolbens 14 sowie durch die von der Druckfeder 26 ausgeübten Kraft bestimmt, also wesentlich kleiner als die Schließkraft.

Zum Öffnen der Form wird der Elektromotor in entgegengesetzte Richtung angetrieben. Die Antriebsplatte wandert entgegen der Richtung des Pfeiles A nach links. Ihr folgt der erste kleine Kolben 14, so daß der Druck im Druckraum 16 abnimmt. Nach einer ersten Phase des Druckabbaus, die der zweiten Phase des Druckaufbaus entspricht, wird der Fluidraum 21 wieder zum Druckraum 16 geöffnet. Nach einer zweiten Phase des Druckabbaus, die der ersten Phase des Druckaufbaus entspricht, wird die Kupplung zwischen der Antriebsplatte 10 und dem Zwischenteil 15 des hydraulischen Kraftübersetzers12 geschlossen. Die Blockierung des Zwischenteils wird aufgehoben. Dann wird der hydraulische Kraftübersetzer als Ganzes zurück in eine der geöffneten Schließeinheit entsprechende Stellung gebracht.

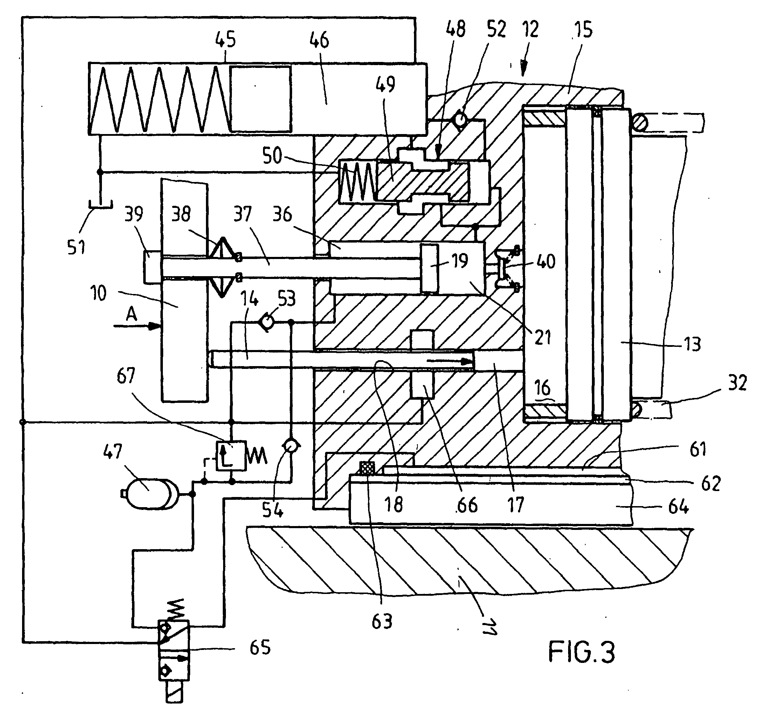

Bei dem Ausführungsbeispiel nach Figur 3 ist der erste kleine Kolben 14 ein einfacher Plungerkolben, der in eine Bohrung 18 des Zwischenteils 15 eintaucht. Der zweite kleine Kolben 19 ist nun doppeltwirkend ausgebildet. Dem Fluidraum 21 bezüglich des Kolbens 19 gegenüberliegend ist ein zweiter, ringförmiger Fluidraum 36 vorhanden, der von einer Kolbenstange 37 gequert wird, über die der Kolben 19 von der Antriebsplatte 10 bewegbar ist. Und zwar ist die Kolbenstange 37 im Sinne einer Verkleinerung des Fluidraums 21 über eine aus mehreren Tellerfedern bestehende vorgespannte Federanordnung 38 und in Gegenrichtung über einen Flansch 39 mitnehmbar, der von der Federanordnung 38 an der Antriebsplatte 10 gehalten wird.

Zwischen dem Fluidraum 21 und dem Druckraum 16 ist ein Rückschlagventil 40 angeordnet, das vom Druckraum 16 zum Fluidraum 21 hin sperrt.

Am Zwischenteil 15 sind außerdem ein als Kolbenspeicher ausgebildeter Hydrospeicher 45, in dessen Speicherraum 46 ein Druck im Bereich von 20 bar herrschen möge, und ein Hydrospeicher 47 befestigt, der auf einen sehr viel höheren Druck im Bereich zwischen 100 und 200 bar aufgeladen ist. Über ein Druckzuschaltventil 48 kann vom Fluidraum 21 aus Druckflüssigkeit in den Speicherraum 46 abfließen. Der Schieber 49 des Druckbegrenzungsventils wird in Öffnungsrichtung von dem in dem Fluidraum 21 herrschenden Druck und in Schließrichtung von einer Druckfeder 50 beaufschlagt, die sich in einem genauso wie der Federraum des Hydrospeichers 45 mit einem Tank 51 verbundenen Federraum befindet. Parallel zu dem Ventil 48 liegt zwischen dem Fluidraum und dem Speicherraum 46 ein Rückschlagventil 52, das vom Fluidraum 21 zum Speicherraum 46 hin sperrt.

Aus dem Speicherraum 46 kann Druckflüssigkeit über ein als Rückschlagventil ausgebildetes Einlaßventil 53 einströmen. Über ein ebenfalls als Rückschlagventil ausgebildetes Auslaßventil 54 kann Druckflüssigkeit aus dem Fluidraum 36 in den Hydrospeicher 47 verdrängt werden. Der zweite kleine Kolben 19 ist somit auch als Arbeitskolben einer Plungerpumpe wirksam, mit der Druckflüssigkeit aus dem Hydrospeicher 45 angesaugt und in den Hydrospeicher 47 abgegeben wird. Dieser kann dadurch auf hohem Druckniveau gehalten werden.

Druckflüssigkeit aus dem Hydrospeicher 47 wird gebraucht, um die Blockiereinrichtung zu betätigen, mit der das Zwischenteil 15 bezüglich des Maschinengestells blockierbar ist. Die Blockiereinrichtung umfaßt ein das Zwischenteil 15 unter Bildung eines umlaufenden Freiraums 61 umgebendes, dünnwandiges Rohr 62, an dessen Enden der Freiraum durch Dichtungen 63 abgedichtet ist. Das Rohr 62 ist außen von einer Mehrzahl einzelner Bremsstäbe 64 umgeben, die sich bei Auflage auf dem entspannten Rohr 62 zu einem geschlossenen Ring ergänzen und die axial mit einem geringen Spiel, das ihre freie Beweglichkeit in radialer Richtung gewährleistet, am Zwischenteil gehalten werden. Jeder Bremsstab 64 kann außen mit einem Reibbelag versehen sein. Im entspannten Zustand des Rohrs 62 haben die Bremsstäbe einen Abstand von einer Wand des Maschinengestells, das in Figur 3 mit der Bezugszahl 11 versehen ist. Der Freiraum 61 ist an ein 3/2 Wege Sitzventil 65 angeschlossen und in dessen einer Stellung mit dem Hydrospeicher 45 und in der anderen Stellung mit dem Hydrospeicher 47 verbunden.

Wie bei dem Ausführungsbeispiel nach Figur 2 wird auch bei dem Ausführungsbeispiel nach Figur 3 der erste kleine Kolben 14 zur Steuerung eines Durchflußquerschnitts für Druckflüssigkeit genutzt. Dazu ist die Bohrung 18 mit einer umlaufenden Nut 66 versehen, die mit dem Hydrospeicher 46 fluidisch verbunden ist. Die Ringnut 66 befindet sich an einer solchen Stelle der Bohrung 18, daß der Kolben 14 während der Stellbewegungen einen Durchflußquerschnitt zwischen dem Druckraum 16 und dem Speicherraum 46 aufgesteuert hat.

Bei ganz geöffneter Schließeinheit einer Kunststoffspritzgießmaschine befinden sich die Antriebsplatte wesentlich weiter vom Zwischenteil entfernt als in Figur 3 gezeigt. Der Kolben 14 ist weniger weit in die Bohrung 18 eingetaucht, so daß der Druckraum 16 fluidisch mit dem Speicherraum 46 verbunden ist. Auch der Kolben 19 befindet sich, in der Ansicht nach Figur 3, weiter links. Das Ventil 48 ist geschlossen. Im Druckraum 16 und im Fluidraum 21 herrscht der gleiche Druck wie im Speicherraum 46. Soll nun die Form geschlossen werden, so wird die Antriebsplatte 10 in Richtung des Pfeiles A nach rechts bewegt und nimmt die Kolben 14 und 19 mit. Über die unter einem Vorspanndruck von etwa 20 bar stehende Druckflüssigkeitspolster im Druckraum 16 und im Fluidraum 21 sowie über die Schraubendruckfeder 32 werden auch der große Kolben 13 und das Zwischenteil 15 der Hydroeinheit 12 mitbewegt, ohne daß eine relative Bewegung zwischen den Kolben 14 und 19 und dem Zwischenteil 15 stattfinden würde.

Ist schließlich die Form geschlossen, steht der weiteren Bewegung des großen Kolbens 13 ein hoher Widerstand entgegen. Das Ventil 65 wird in die nach Figur 3 andere Stellung gebracht und damit der Freiraum 61 mit dem Hydrospeicher 47 verbunden und dadurch mit hohem Druck beaufschlagt. Das Rohr 62 weitet sich auf, so daß sich die Bremsstäbe nach außen an das Maschinengestell 11 anlegen. Dadurch ist das Zwischenteil 15 durch Klemmung gegenüber dem Maschinengestell blockiert. Die Kolben 14 und 19 bewegen sich relativ zum Zwischenteil weiter. Der Kolben 14 macht den Durchflußquerschnitt an der Ringnut 66 zu und verdrängt Druckflüssigkeit aus dem Teilraum 17. Der Kolben 19 verdrängt Druckflüssigkeit aus dem Fluidraum 21 über das Rückschlagventil 40 in den Druckraum 16. In dieser ersten Phase des Druckaufbaus in dem Druckraum 16 steigt der Druck sehr schnell mit dem Weg der Kolben 14 und 19 an, bis zum Beispiel 50 bar erreicht sind. Bei 50 bar Druck in dem Fluidraum 21 öffnet das Ventil 48 und es beginnt die zweite Phase des Druckaufbaus. Anders als bei den Ausführungsbeispielen nach den Figuren 1 und 2 wird der zweite kleine Kolben 19 auch während der zweiten Phase des Druckaufbaus von der Antriebsplatte 10 weiterbewegt. Dabei verdrängt der Kolben 19 Druckflüssigkeit aus dem Fluidraum 21 über das Ventil 48 in den Speicherraum 46. Das Rückschlagventil 40 schließt, wenn das Ventil 48 öffnet. Zum Druckaufbau im Druckraum 16 trägt jetzt nur noch die Bewegung des kleinen Kolbens 14 bei. In den kolbenstangenseitig des Kolbens 19 befindlichen Fluidraum 36 strömt über das Rückschlagventil 53 Druckflüssigkeit aus dem Speicherraum 46 nach. Die Druckflüssigkeitsmenge in dem Speicherraum 46 nimmt also um das Volumen der nachgeschobenen Kolbenstange 37 zu.

Zum Öffnen der Form wird der nicht gezeigte Elektromotor in die entgegengesetzte Drehrichtung angetrieben, so daß sich die Antriebsplatte entgegen der Richtung des Pfeiles A bewegt. Die Kolben 14 und 19 folgen, wobei der Druck in dem Fluidraum 21 schnell abfällt und das Ventil 48 schließt. Über das Rückschlagventil 52 kann Druckflüssigkeit aus dem Speicherraum 46 in den Fluidraum nachströmen. Beim Druckabbau lassen sich keine zwei Phasen mehr unterscheiden, da das Rückschlagventil 40 bis zum Beginn der zweiten Druckaufbauphase im nächsten Arbeitszyklus geschlossen bleibt. Wenn der Kolben 14 dieselbe Position wie zu Beginn der ersten Phase des Druckaufbaus erreicht hat, öffnet er einen Durchflußquerschnitt zwischen dem Teilraum 17 und der Ringnut 66, so daß die vom Kolben 19 während der ersten Druckaufbauphase über das Rückschlagventil 40 in den Druckraum 16 verdrängte Druckflüssigkeitsmenge zurück in den Speicherraum 46 fließen kann und wieder gleiche Drücke in den Räumen 16, 21 und 46 herrschen.

Die Kolbenstange 37 hat einen solchen Durchmesser, daß während der Druckabbauphase geringfügig mehr Druckflüssigkeit über das Rückschlagventil 54 verdrängt wird, als vorher zur Betätigung der Blockiereinrichtung dem Hydrospeicher entnommen worden ist. Zuviel geförderte Druckflüssigkeit strömt über ein Druckbegrenzungsventil 67 zum Speicherraum 46 ab.

Am Ende der Druckabbauphase wird das Ventil 65 umgeschaltet und dadurch der Freiraum 61 mit dem Speicherraum 46 verbunden und auf dessen Druck entlastet. Der Druck in dem Fluidraum 36 fällt bis auf einen zum Bewegen der Schließeinheit in öffnungsrichtung notwendigen Druck ab. Im folgenden kann das Zwischenteil 15 über das Druckflüssigkeitspolster im Fluidraum 36 und über den Kolben 19 und die Kolbenstange 37 von der Antriebsplatte in Öffnungsrichtung bewegt werden. Sollte die Querschnittsfläche des Fluidraumes zu klein sein, kann man zwischen der Antriebsplatte 10 und dem Zwischenteil 15 eine schaltbare Kupplung vorsehen.

## Patentansprüche

1. Antriebsvorrichtung, insbesondere für die Schließeinheit, die Einspritzeinheit oder die Auswerfer einer Kunststoffspritzgießmaschine,
mit einem durch einen Elektromotor axial verfahrbaren Antriebselement (10) und mit einer durch Verfahren des Antriebselements (10) in dieselbe Richtung wie dieses verfahrbaren Hydroeinheit (12), wobei die Hydroeinheit (12) ein Kraftübersetzer mit zwei relativ zueinander beweglichen und sich in der Größe ihrer Wirkflächen voneinander unterscheidende Kolben (13, 14) und mit einem Zwischenteil (15) ist, das zusammen mit den Kolben einen mit einer Druckflüssigkeit gefüllten Druckraum (16) einschließt, wobei der die kleinere Wirkfläche aufweisende, kleine Kolben (14) mit dem Antriebselement (10) mechanisch verbunden ist, wobei für eine Stellbewegung die Hydroeinheit (12) als Ganzes verfahrbar ist, und wobei für die Ausübung einer hohen Kraft durch den die größere Wirkfläche aufweisenden, großen Kolben (13) das Zwischenteil (15) während einer Kraftaufbaubewegung des Antriebselements (10) gegen eine Verschiebung relativ zu einem ortsfesten Gestell (11) durch eine Blockiereinrichtung blockierbar ist, **dadurch gekennzeichnet, daß** die Hydroeinheit (12) einen zweiten kleinen Kolben (19) aufweist und zwischen einem Fluidraum (21), an den der zweite kleine Kolben (19) angrenzt, und dem Druckraum (16) ein Ventil (28, 40) angeordnet ist, über das Druckflüssigkeit aus dem Fluidraum (21) in den Druckraum (16) verdrängbar ist und durch das der Fluidraum (21) gegenüber dem Druckraum (16) absperrbar ist.

2. Antriebsvorrichtung nach Anspruch 1, **dadurch gekennzeichnet, daß** das Ventil (40) ein zum Druckraum (16) hin öffnendes Rückschlagventil ist.

3. Antriebsvorrichtung nach Anspruch 1 oder 2, **dadurch gekennzeichnet, daß** der zweite kleine Kolben (19) von dem Antriebselement (10) über eine lösbare Kupplungseinrichtung mitnehmbar ist.

4. Antriebsvorrichtung nach Anspruch 3, **dadurch gekennzeichnet, daß** die Kupplungseinrichtung eine vorgespannte Federanordnung (26, 38) aufweist, über die eine Bewegung des Antriebselements (10) auf den zweiten kleinen Kolben (19) übertragbar ist.

5. Antriebsvorrichtung nach Anspruch 1 oder 2, **dadurch gekennzeichnet, daß** über ein zweites Ventil (48) der Fluidraum (21) und ein Vorratsraum (46) für Druckflüssigkeit miteinander verbindbar sind, wobei nach dem Öffnen des zweiten Ventils (48) durch den weiter vom sich in der Kraftaufbaubewegung befindlichen Antriebselement (10) mitgenommenen zweiten kleinen Kolben (19) Druckflüssigkeit aus dem Fluidraum (21) in den Vorratsraum (46) verdrängbar ist.

6. Antriebsvorrichtung nach Anspruch 5, **dadurch gekennzeichnet, daß** das zweite Ventil (48) von dem Druck im Fluidraum (21) gegen die Kraft eines Kraftspeichers (50) in Öffnungsrichtung beaufschlagt ist.

7. Antriebsvorrichtung nach Anspruch 5 oder 6, **dadurch gekennzeichnet, daß** parallel zu dem zweiten Ventil (48) zwischen dem Fluidraum (21) und dem Vorratsraum (46) ein zum Fluidraum (21) hin öffnendes Rückschlagventil (52) angeordnet ist.

8. Antriebsvorrichtung nach einem der Ansprüche 5 bis 7, **dadurch gekennzeichnet, daß** der Druckraum (16) gegen Ende der Kraftabbaubewegung mit dem Vorratsraum (46) verbindbar ist.

9. Antriebsvorrichtung nach Anspruch 8, **dadurch gekennzeichnet, daß** der erste kleine Kolben (14) in einer bestimmten Position zum Zwischenteil (15) einen Durchflußquerschnitt zwischen dem Druckraum (16) und dem Vorratsraum (46) öffnet.

10. Antriebsvorrichtung nach einem der Ansprüche 5 bis 9, **dadurch gekennzeichnet, daß** sich auf der dem Fluidraum (21) gegenüberliegenden Seite des zweiten kleinen Kolbens (19) ein zweiter Fluidraum (36) befindet, in den Druckflüssigkeit einsperrbar ist, so daß über die eingesperrte Druckflüssigkeit die Hydroeinheit (12) vom Antriebselement (10) im Rückzug mitnehmbar ist.

11. Antriebsvorrichtung nach Anspruch 10, **dadurch gekennzeichnet, daß** der zweite Fluidraum (36) über ein Einlaßventil (53) mit dem Vorratsraum (46) und über ein Auslaßventil (54) mit einem Hochdruckspeicher (47) verbindbar ist

12. Antriebsvorrichtung nach Anspruch 11, **dadurch gekennzeichnet, daß** die Blockiereinrichtung hydraulisch betätigbar ist und daß ein Arbeitsraum (61) der Blockiereinrichtung in einer Stellung eines Ventils (65) mit dem Hochdruckspeicher (47) und in einer anderen Stellung dieses Ventils (65) mit dem Vorratsraum (46) verbunden ist.

13. Antriebsvorrichtung nach Anspruch 10, 11 oder 12, **dadurch gekennzeichnet, daß** der zweite Fluidraum (36) aufgrund einer ihn querenden und der Verbindung zwischen dem zweiten kleinen Kolben (19) und dem Antriebselement (10) dienenden Kolbenstange (37) im Querschnitt kleiner als der erste Fluidraum (21) ist.

## Claims

1. A drive device, in particular for the closing unit, the injection unit or the ejectors of a plastics injection moulding machine, with a drive element (10) which can be axially moved by an electric motor and with a hydraulic unit (12) which, by moving the drive element (10), can be moved in the same direction as the latter, wherein the hydraulic unit (12) is a force multiplier with two pistons (13, 14) which are movable in relation to one another and differ from one another in the size of their effective surface areas, and has an intermediate part (15), which together with the pistons encloses a pressure chamber (16) filled with a pressure fluid, wherein the small piston (14), having the smaller effective surface area, is mechanically connected to the drive element (10), wherein the hydraulic unit (12) as a whole can be moved for a positioning movement, wherein, for the exertion of a great force by the large piston (13), having the larger effective surface area, the intermediate part (15) can be blocked against displacement in relation to a fixed frame (11) by a blocking device during a force build-up movement of the drive element (10), **characterized by** the fact that the hydraulic unit (12) has a second small piston (19) and the fact that arranged between a fluid chamber (21), which is adjoined by the second small piston (19), and the pressure chamber (16) is a valve (28, 40), via which pressure fluid can be forced out of the fluid chamber (21) into the pressure chamber (16) and by which the fluid chamber (21) can be shut off with respect to the pressure chamber (16).

2. A drive device according to claim 1, **characterized by** the fact that the valve (40) is a non-return valve opening towards the pressure chamber (16).

3. A drive device according to claim 1 or 2, **characterized by** the fact that the second email piston (19) can be taken along by the drive element (10) by means of a releasable coupling device.

4. A drive device according to claim 3, **characterized by** the fact that the coupling device has a biased spring arrangement (26, 38), by means of which a movement of the drive element (10) can be transmitted to the second small piston (19).

5. A drive device according to claim 1 or 2, **characterized by** the fact that the fluid chamber (21) and a storage chamber (46) for pressure fluid can be connected to one another via a second valve (48), it being possible after opening of the second valve (48) for pressure fluid to be forced out of the pressure chamber (21) into the storage chamber (46) by the second small piston (19), taken along further by the drive element (10) engaged in the force build up movement,

6. A drive device according to claim 5, **characterized by** the fact that the second valve (48) is acted on by the pressure in the fluid chamber (21) in the opening direction against the force of an energy store (50).

7. A drive device according to claim 5 or 6, **characterized by** the fact that arranged parallel to the second valve (48), between the fluid chamber (21) and the storage chamber (46), is a non-return valve (52) which opens towards the fluid chamber (21).

8. A drive device according to any of claims 5 to 7, **characterized by** the fact that the pressure chamber (16) can be connected to the storage chamber (46) towards the end of the force reducing movement.

9. A drive device according to claim 8, **characterized by** the fact that, in specific position with respect to the intermediate part (15), the first small piston (14) opens a flow cross section between the pressure chamber (16) and the storage chamber (46).

10. A drive device according to any of claims 5 to 9, **characterized by** the fact that on the side of the second small piston (19) opposite from the fluid chamber (21) there is a second fluid chamber (36), in which pressure fluid can be confined, so that the hydraulic unit (12) can be taken along by the drive element (10) on its return by means of the confined pressure fluid.

11. A drive device according to claim 10, **characterized by** the fact that the second fluid chamber (36) can be connected via an inlet valve (53) to the storage chamber (46) and via an outlet valve (54) to a high-pressure accumulator (47)

12. A drive device according to claim 11, **characterized by** the fact that the blocking device can be hydraulically operated and the fact that a working chamber (61) of the blocking device is connected to the high-pressure accumulator (47) in one position of a valve (65) and is connected to the storage chamber (46) in another position of the valve (65).

13. A drive device according to claim 10, 11 or 12 **characterized by** the fact that the second fluid chamber (36) is smaller in cross section than the first fluid chamber (21) on account of a piston rod (37) crossing it and serving for the connection between the second piston (19) and the drive element (10).

## Revendications

1. Un dispositif d'entraînement, en particulier pour l'unité de fermeture, l'unité d'injection ou l'éjecteur d'une machine à mouler le plastique par injection, doté d'un élément (10) d'entraînement pouvant coulisser dans la direction axiale sous l'effet d'un moteur électrique et doté d'une unité (12) hydraulique, pouvant être amenée à coulisser dans le même sens que élément (10) d'entraînement par entraînement de celui-ci,
cependant que l'unité (12) hydraulique est un multiplicateur de force doté de deux pistons (13, 14), pouvant bouger l'un par rapport à l'autre et différant de par leur surface active, et doté d'un élément (15) intermédiaire, lequel conjointement avec les pistons enferme une chambre (16) de pression remplie d'un fluide de pression, cependant que le petit piston (14) présentant la surface active moins importante est relié par voie mécanique à l'élément (10) d'entraînement,
cependant que l'unité (12) hydraulique peut être déplacée d'une seule pièce pour un mouvement de positionnement
et cependant qu'un mécanisme de blocage peut bloquer l'élément (15) intermédiaire contre tout mouvement par rapport à un socle (11) fixe pendant que l'élément (10) d'entraînement effectue un mouvement d'accumulation de la force, afin de permettre au gros piston (13), présentant la surface active la plus importante, d'exercer une force élevée,
**caractérisé en ce que** l'unité (12) hydraulique présente un second petit piston (19) et une valve (28, 40) est disposée entre une chambre (21) de fluide avoisinée par le petit piston (19) et la chambre (16) de pression, valve qui permet de refouler du fluide de pression hors de la chambre (21) de fluide vers la chambre (16) de pression et qui permet d'isoler la chambre (21) de fluide de la chambre (16) de pression.

2. Un dispositif d'entraînement selon la revendication n° 1, **caractérisé en ce que** la valve (40) est un clapet anti-retour ouvrant vers la chambre (16) de pression.

3. Un dispositif d'entraînement selon la revendication n° 1 ou n° 2, **caractérisé en ce que** le second petit piston (19) peut être entraîné par l'élément (10) d'entraînement au travers d'un mécanisme d'accouplement débrayable.

4. Un dispositif d'entraînement selon la revendication n° 3, **caractérisé en ce que** le mécanisme d'accouplement présente un arrangement de ressorts (26, 38) précontraints, qui peut transmettre un mouvement de l'élément (10) d'entraînement au second petit piston (19).

5. Un dispositif d'entraînement selon la revendication n° 1 ou n° 2, **caractérisé en ce qu'**une deuxième valve (48) permet de relier entre elles la chambre (21) de fluide et une chambre (46) de stockage de fluide de pression, cependant qu'après l'ouverture de la deuxième valve (48), le second petit piston (19), que l'élément (10) d'entraînement situé dans le mouvement d'accumulation de la force continue à entraîner, peut refouler du fluide de pression hors de la chambre (21) de fluide vers la chambre (46) de stockage.

6. Un dispositif d'entraînement selon la revendication n° 5, **caractérisé en ce que** la deuxième valve (48) est sollicitée dans le sens de l'ouverture par la pression régnant dans la chambre (21) de fluide contre la force exercée par un accumulateur (50) de force.

7. Un dispositif d'entraînement selon la revendication n° 5 ou n° 6, **caractérisé en ce qu'**en parallèle avec la deuxième valve (48), un clapet (52) anti-retour ouvrant vers la chambre (21) de fluide est disposé entre la chambre (21) de fluide et la chambre (46) de stockage.

8. Un dispositif d'entraînement selon une des revendications n° 5 à n° 7, **caractérisé en ce que** la chambre (16) de pression peut être raccordée à la chambre (46) de stockage vers la fin du mouvement de réduction de la force.

9. Un dispositif d'entraînement selon la revendication n° 8, **caractérisé en ce que,** dans une position déterminée par rapport à l'élément (15) intermédiaire, le premier petit piston (14) ouvre une section de débit entre la chambre (16) de pression et la chambre (46) de stockage.

10. Un dispositif d'entraînement selon une des revendications n° 5 à n° 9, **caractérisé en ce que** sur la face opposée à la chambre (21) de fluide du second petit piston (19) est disposée une deuxième chambre (36) de fluide, où peut être enfermé du fluide de pression, de façon à ce que l'élément (10) d'entraînement dans son mouvement de retour puisse entraîner l'unité (12) hydraulique au travers du fluide de pression enfermé.

11. Un dispositif d'entraînement selon la revendication n° 10, **caractérisé en ce que** la deuxième chambre (36) de fluide peut être reliée à la chambre (46) de stockage par une valve (53) d'alimentation et à un accumulateur (47) à haute pression par une valve (54) d'évacuation.

12. Un dispositif d'entraînement selon la revendication n° 11, **caractérisé en ce que** le mécanisme de blocage peut être actionné par voie hydraulique et qu'une chambre (61) de travail du mécanisme de blocage est reliée à l'accumulateur (47) à haute pression dans une position d'une valve (65) et à la chambre (46) de stockage dans une autre position de cette valve (65).

13. Un dispositif d'entraînement selon la revendication n° 10, n° 11 ou n° 12, **caractérisé en ce que** la deuxième chambre (36) de fluide est de section inférieure à celle de la première chambre (21) de fluide à cause d'une tige (37) de vérin, qui la traverse et qui permet la liaison entre le second petit piston (19) et l'élément (10) d'entraînement.
